# EUROPEAN PATENT SPECIFICATION

(11) **EP 4 084 438 B1**
(45) Date of publication and mention of the grant of the patent: **02.10.2024**
(21) Application number: 20908562.0
(22) Date of filing: 04.09.2020
(51) Int. Cl.: H04L 61/2503

(54) **VIRTUAL PRIVATE CLOUD AND NON-PUBLIC CLOUD DATA CENTER COMMUNICATION METHOD, VIRTUAL PRIVATE CLOUD AND NON-PUBLIC CLOUD DATA CENTER COMMUNICATION CONFIGURATION METHOD, AND RELATED APPARATUSES**
KOMMUNIKATIONSVERFAHREN FÜR DATENCENTER EINER VIRTUELLEN PRIVATEN CLOUD UND NICHTÖFFENTLICHEN CLOUD, KOMMUNIKATIONSKONFIGURATIONSVERFAHREN FÜR DATENCENTER EINER VIRTUELLEN PRIVATEN CLOUD UND NICHTÖFFENTLICHEN CLOUD UND ZUGEHÖRIGE VORRICHTUNGEN
PROCÉDÉ DE COMMUNICATION ENTRE UN NUAGE PRIVÉ VIRTUEL ET UN CENTRE DE DONNÉES NON PUBLIC, ET PROCÉDÉ DE CONFIGURATION DE COMMUNICATION ENTRE UN NUAGE PRIVÉ VIRTUEL ET UN CENTRE DE DONNÉES NON PUBLIC, ET APPAREILS ASSOCIÉS

(30) Priority: 31.12.2019 CN 201911424828
(43) Date of publication of application: 02.11.2022
(73) Proprietor: Huawei Cloud Computing Technologies Co., Ltd., Guizhou 550025 (CN)
(72) Inventor: LIU, Haixia, Shenzhen, Guangdong 518129 (CN); GAO, Zhonghua, Shenzhen, Guangdong 518129 (CN)
(74) Representative: Gill Jennings & Every LLP
(86) International application number: PCT/CN2020/113370
(87) International publication number: WO 2021/135344

(56) References cited:
- WO-A1-2019/071464
- CN-A- 106 559 511
- CN-A- 106 789 367
- CN-A- 107 948 086
- CN-A- 109 450 905
- US-A1- 2008 201 486
- US-A1- 2016 072 764
- ANONYMOUS: "Twice NAT configuration example", 1 January 2017 (2017-01-01), pages 1 - 3, XP055976917, Retrieved from the Internet <URL:https://techhub.hpe.com/eginfolib/networking/docs/routers/msrv7/cg/5200-3017_l3-ip-svcs_cg/content/466628264.htm> [retrieved on 20221101]
- IFCONFIG.IT: "Cisco ASA VPN with over overlapping addresses and twice NAT", 10 August 2015 (2015-08-10), XP055976920, Retrieved from the Internet <URL:https://www.ifconfig.it/hugo/2015/08/cisco-asa-vpn-with-over-overlapping-addresses-and-twice-nat/> [retrieved on 20221101]
- SRISURESH M HOLDREGE LUCENT TECHNOLOGIES P: "IP Network Address Translator (NAT) Terminology and Considerations; rfc2663.txt", IP NETWORK ADDRESS TRANSLATOR (NAT) TERMINOLOGY AND CONSIDERATIONS; RFC2663.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 August 1999 (1999-08-01), XP015008446

## Description

### TECHNICAL FIELD

This application relates to the field of cloud technologies, and in particular, to a method for communication between a virtual private cloud and an on-premises data center, a method for configuring communication between a virtual private cloud and an on-premises data center, and a related apparatus.

### BACKGROUND

With development of cloud technologies, there is a demand for communication between a virtual private cloud (Virtual Private Cloud, VPC) and an on-premises data center. However, due to reasons such as private network address planning, if private network addresses of the VPC and the on-premises data center that need to communicate with each other overlap, that is, the VPC and the on-premises data center have a same private network segment, the VPC and the on-premises data center cannot communicate with each other.

SRISURESH M HOLDREGE LUCENT TECHNOLOGIES P, "IP Network Address Translator (NAT) Terminology and Considerations; rfc2663.txt", INTERNET ENGINEERING TASK FORCE, IETF; STANDARD, INTERNET SOCIETY (ISOC) 4, RUE DES FALAISES CH- 1205 GENEVA, SWITZERLAND, (19990801), XP015008446 discloses that Twice NAT is necessary when private and external realms have address collisions. The most common case where this would happen is when a site had (improperly) numbered its internal nodes using public addresses that have been assigned to another organization. Alternatively, a site may have changed from one provider to another, but chosen to keep (internally) the addresses it had been assigned by the first provider. That provider might then later reassign those addresses to someone else. The key issue in such cases is that the address of the host in the external realm may have been assigned the same address as a host within the local site. If that address were to appear in a packet, it would be forwarded to the internal node rather than through the NAT device to the external realm. Twice-NAT attempts to bridge these realms by translating both source and destination address of an IP packet, as the packet transitions realms. SRISURESH M HOLDREGE LUCENT TECHNOLOGIES P also teaches that a private network connected to a business partner through a VPN could employ traditional NAT to communicate with the partner. Likewise, it is possible to employ twice NAT, if the partner's address space overlapped with the private network.

US 2016/072764 A1 discloses systems and methods for network address translations are provided, which include a dynamic double network address translation solution for interconnecting overlapping IP networks.

### SUMMARY

To resolve a problem in the conventional technology, this application provides a method for communication between a virtual private cloud and an on-premises data center, a method for configuring communication between a virtual private cloud and an on-premises data center, and a related apparatus, so as to resolve a technical problem that a VPC cannot communicate with an on-premises data center because private network addresses of the VPC and the on-premises data center overlap.

According to a first aspect, this application provides a method for configuring communication between a virtual private cloud VPC and an on-premises data center. The method is defined by claim 1.

Through bridging of the second VPC, the first VPC accesses the subnet of the on-premises data center by using the second VPC, so that communication between the first VPC and the second VPC can be implemented when the private network address segments of the first VPC and the second VPC overlap.

By configuring a routing rule, the second VPC can forward a packet between the first VPC and the remote connection gateway, to implement bridging.

By configuring a packet rule, the NAT gateway binds the private network address in the first VPC with the first address, and binds the address in the subnet of the on-premises data center with the second address.

Through bridging of the second VPC, a device in the first VPC may access the remote connection gateway by using the second address.

In a possible implementation of the second aspect, the method further includes the following steps: configuring a connection between the NAT gateway and the second VPC, and configuring a remote connection between the remote connection gateway and the subnet of the on-premises data center.

Because the NAT gateway is connected to the second VPC, and the remote connection gateway is remotely connected to the subnet of the on-premises data center, the first VPC may access the subnet of the on-premises data center by accessing the remote connection gateway of the second VPC.

By setting a routing rule, the response packet returned by the subnet of the on-premises data center can be forwarded to the first VPC by using the second VPC, to make a response.

The remote connection gateway is remotely connected to the subnet of the on-premises data center. Therefore, after a packet reaches the remote connection gateway, the packet may reach the subnet of the on-premises data center through the remote connection gateway.

According to a second aspect, this application provides an apparatus for configuring communication between a virtual private cloud VPC and an on-premises data center. The apparatus is defined by claim 3.

The second aspect or any implementation of the second aspect is an apparatus implementation corresponding to the first aspect or any implementation of the first aspect. Descriptions of the first aspect or any implementation of the first aspect are applicable to the second aspect or any implementation of the second aspect. Details are not described herein again.

According to a third aspect, this application provides a computing device, including at least one memory and at least one processor. The at least one memory is configured to store program instructions, and the at least one processor executes the program instructions to perform the method in the first aspect or any possible implementation of the first aspect.

### BRIEF DESCRIPTION OF DRAWINGS

FIG. 1 is a schematic diagram of a system structure of a VPC communications system;
FIG. 2 is a schematic diagram of another system structure of a VPC communications system;
FIG. 3 is a flowchart of a method for configuring communication between a VPC and an on-premises data center according to an embodiment of the present invention;
FIG. 4 is a schematic diagram of a system structure of a VPC communications system according to an embodiment of the present invention;
FIG. 5A and FIG. 5B are a data interaction diagram of a method for communication between a VPC and an on-premises data center according to an embodiment of the present invention;
FIG. 6 is a schematic diagram of a structure of a configuration apparatus according to an embodiment of the present invention; and
FIG. 7 is a schematic diagram of a structure of a computing device according to an embodiment of the present invention.

### DESCRIPTION OF EMBODIMENTS

Terms used in embodiments of the present invention are first explained.

A cloud data center is a data center that provides a public cloud service.

An on-premises data center is a data center that provides a non-public cloud service. If the on-premises data center provides an on-premises service, the on-premises data center includes a plurality of physical machines (physical machine). If the on-premises data center provides a private cloud service, the on-premises data center includes a plurality of virtual machines.

A public cloud service is infrastructure as a service (Infrastructure as a Service, IaaS), and means that infrastructure provided by a public cloud service provider is externally provided as a service on the internet. In this service model, a user does not need to construct a data center, but rents infrastructure such as a server, a storage, and a network for use. The public cloud service is implemented by providing a virtual environment (such as a virtual machine). A core attribute of the public cloud service is that a plurality of users share cloud infrastructure and the users are isolated from each other.

A non-public cloud service is infrastructure dedicated to a single user, for example, a private cloud service and an on-premises service.

A private cloud (Private Cloud) service means that a single user owns infrastructure such as a server, a storage, and a network, and can fully control the infrastructure. The private cloud service is implemented by providing a virtual environment (such as a virtual machine). A core attribute of the private cloud service is that the single user exclusively uses the infrastructure.

An on-premises (On-premises) service means that a single user locally builds infrastructure such as a server, a storage, and a network. The user exclusively uses the infrastructure. The on-premises service is implemented by using a physical machine.

A private network address is an IP address that cannot be forwarded on the internet but can be forwarded only on a local area network. The private network address is prohibited from being used on the internet.

The private network address is a reserved IP address. The following table lists classification of private network addresses, a network segment, and a quantity of private network addresses.

| Classification of private network addresses | Network segment | Quantity of available private network addresses |
|---|---|---|
| Class A private network address | 192.168.0.0/16 | 65,532 |
| Class B private network address | 172.16.0.0/12 | 1,048,572 |
| Class C private network address | 10.0.0.0/8 | 16,777,212 |

Virtual private cloud (Virtual Private Cloud, VPC): The VPC is configured on a public cloud, and the VPC is a local area network of a user of a public cloud service in a cloud data center.

Specifically, VPCs are used to isolate virtual networks. Each VPC has an independent tunnel number, and one tunnel number corresponds to one virtual network. Packets between virtual machines in a VPC have a same tunnel identifier and are sent to a physical network for transmission. Tunnel identifiers of virtual machines in the different VPCs are different, and the virtual machines are located on two different routing planes. Therefore, the virtual machines in the different VPCs cannot communicate with each other, naturally implementing logical isolation.

The tunnel identifier may be, for example, a virtual local area network identifier (Virtual Local Area Network Identification, VLAN ID) or a virtual network identifier (Virtual Network ID, VNI).

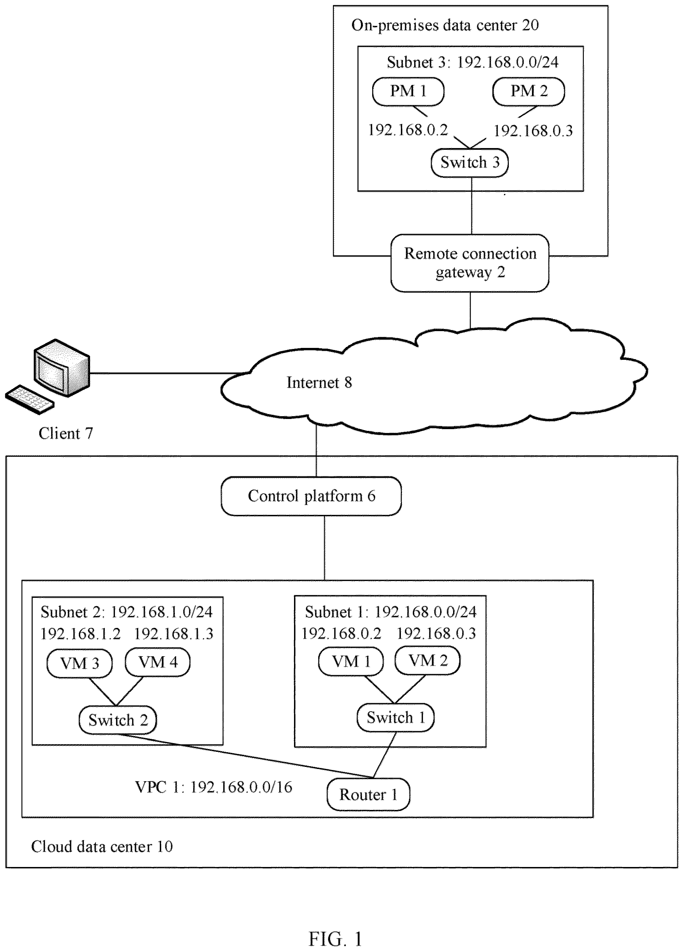

First, FIG. 1 is a schematic diagram of a system structure of a VPC communications system. As shown in FIG. 1, the VPC communications system includes a cloud data center 10, a client 7, and an on-premises data center 20. The cloud data center 10, the client 7, and the on-premises data center 20 all access the internet 8, and the client 7 accesses the cloud data center 10 over the internet 8.

As shown in FIG. 1, the cloud data center 10 provides a VPC 1 for a public cloud user. The VPC 1 includes a subnet 1 and a subnet 2. The subnet 1 and the subnet 2 are connected to a router 1. The subnet 1 includes a virtual machine (virtual machine, VM) 1, a VM 2, and a switch 1. The subnet 2 includes a VM 3, a VM 4, and a switch 2. The VM 1 and the VM 2 are connected to the switch 1, and the VM 3 and the VM 4 are connected to the switch 2.

The router 1 is configured to forward a packet for communication between the subnet 1 and the subnet 2.

The on-premises data center 20 includes a subnet 3 and a remote connection gateway 2. The subnet 3 includes a switch 3, a physical machine (Physical machine, PM) 1, and a PM 2. The PM 1 and the PM 2 are connected to the switch 3, and the switch 3 is connected to the remote connection gateway 2.

As shown in FIG. 1, the subnet 1 and the subnet 3 have a same private network address segment. Therefore, private network addresses of the subnet 1 and the subnet 3 overlap.

The client 7 accesses a control platform 6 over the internet 8, to enter configuration information into the control platform 6. The control platform 6 configures the VPC 1 in the cloud data center 10 based on the configuration information. Specifically, the control platform 6 may configure each function module in the VPC 1, for example, may create or delete the VPC 1, create or delete a virtual machine in the VPC 1, or configure a routing rule of a router in the VPC 1. The control platform 6 may manage the VPC based on the configuration information entered by the user.

After the control platform 6 configures the VPC 1, the client 7 may log in to a VM 1-4 in the VPC 1 through a remote desktop.

The client 7 is, for example, a terminal device having a network access function, such as a mobile phone, a personal computer, or a personal digital assistant. The public cloud user operates the client 7 to access the VM 1-4 provided by the cloud data center 10.

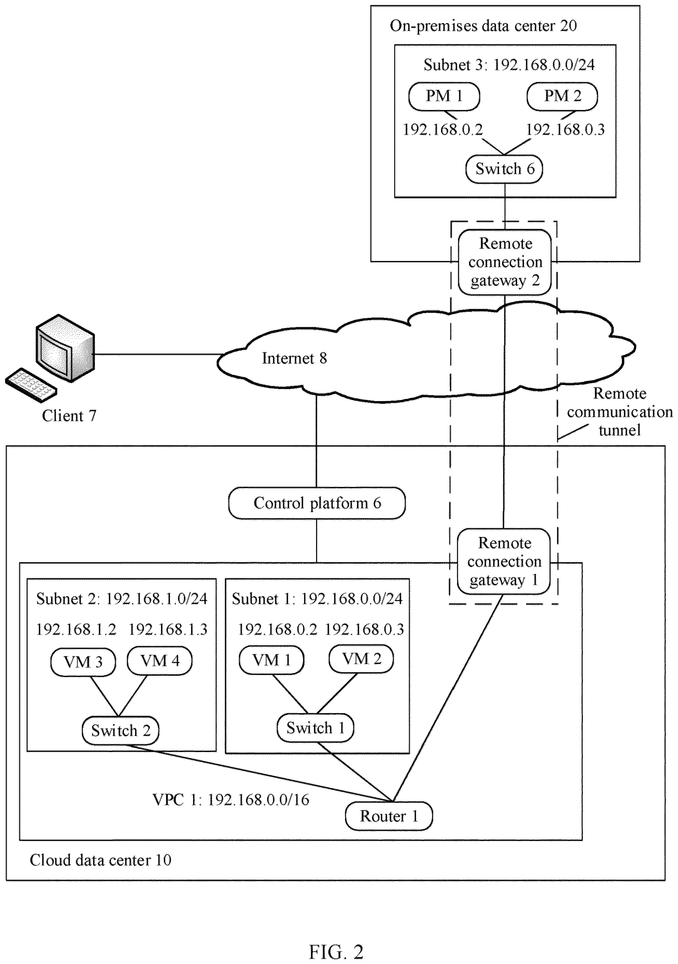

The on-premises data center 20 belongs to the public cloud user, and the cloud data center 10 belongs to a public cloud service provider. The public cloud user obtains control and management permissions of the VPC 1 in the cloud data center 10 by paying the public cloud service provider. In some service requirements, the public cloud user needs to connect the subnet 3 to the subnet 1. Therefore, a remote connection gateway 1 needs to be configured in the VPC 1 to connect to a remote connection gateway 2 of the on-premises data center 20. For details, refer to FIG. 2.

FIG. 2 is a schematic diagram of another system structure of a VPC communications system. Compared with FIG. 1, the remote connection gateway 1 is additionally configured in FIG. 2, a remote communication tunnel is established between the remote connection gateway 1 and the remote connection gateway 2, and an IP packet may be transmitted between the VPC 1 and the subnet 3 through the remote communication tunnel.

When the VM 1 needs to communicate with the PM 1, assuming that the subnet 1 and the subnet 3 have different private network address segments, the VM 1 in the subnet 1 may construct an IP packet. A source IP address of the IP packet is a private network address of the VM 1 in the subnet 1, a destination IP address of the IP packet is a private network address of the PM 1 in the subnet 3, and the IP packet reaches the PM 1 through the switch 1, the router 1, the remote connection gateway 1, the remote connection gateway 2, and the switch 6.

However, in the network environment shown in FIG. 2, the subnet 1 and the subnet 3 have a same private network address segment. Therefore, a source IP address of an IP packet constructed by the VM 1 is the private network address 192.168.0.2 of the VM 1 in the subnet 1, and a destination IP address of the IP packet is the private network address 192.168.0.2 of the PM 1 in the subnet 3. The source IP address and the destination IP address of the IP packet are the same. The IP packet is intercepted by an operating system of the VM 1, or is returned to the VM 1 by the switch 1.

Similarly, a source IP address and a destination IP address of an IP packet sent by the PM 1 to the VM 1 are also the same, which also causes a same technical problem.

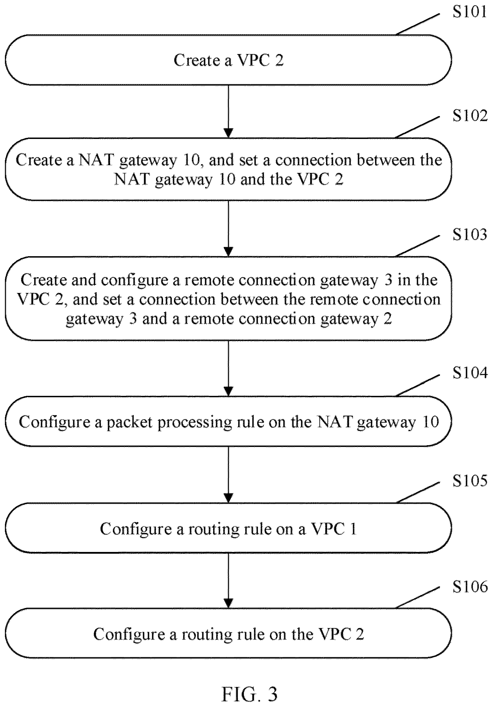

To resolve the foregoing technical problem, an embodiment of the present invention provides a method for configuring communication between a VPC and an on-premises data center. The method is configured based on the VPC system shown in FIG. 1. For details, refer to FIG. 3. FIG. 3 is a flowchart of a method for configuring communication between a VPC and an on-premises data center according to an embodiment of the present invention. The method specifically includes the following steps.

Step S101: Create a VPC 2 in the cloud data center 10.

Step S102: Create a network address translation (Network address translation, NAT) gateway 10 in the VPC 1, and set a connection between the NAT gateway 10 and the VPC 2.

A private network address 10.0.0.9 in a private network address segment of the VPC 2 is set in the NAT gateway 10.

It should be noted that a private network address in a private network address segment of the VPC 1 is also set in the NAT gateway 10. Unless otherwise specified in this embodiment of the present invention, the mentioned private network address in the NAT gateway 10 is the private network address 10.0.0.9 in the VPC 2 in the NAT gateway 10.

Step S103: Create and configure a remote connection gateway 3 in the VPC 2, and set a remote connection between the remote connection gateway 3 and the remote connection gateway 2.

A private network address 10.0.0.10 in the private network address segment of the VPC 2 is set in the remote connection gateway 3.

The remote connection gateway is, for example, a direct connect gateway or a virtual private network (Virtual private network, VPN) gateway.

Step S104: Configure a packet processing rule on the NAT gateway 10.

### Packet processing rule 1:

For an outbound packet whose source IP address is 192.168.0.2 and destination IP address is 10.0.0.10, modify the source IP address into 10.0.0.9, modify the destination IP address into 192.168.0.2, and send a modified outbound packet to a router 3.

### Packet processing rule 2:

For an inbound packet whose source IP address is 192.168.0.2 and destination IP address is 10.0.0.9, modify the source IP address into 10.0.0.10, modify the destination IP address into 192.168.0.2, and send a modified inbound packet to the router 1.

The outbound packet is a packet received by the NAT gateway 10 from the router 1, and the inbound packet is a packet received by the NAT gateway 10 from a router 2.

Step S105: Configure a routing rule on the VPC 1.

Routing rule 1: Forward a packet whose destination IP address belongs to 10.0.0.0/24 to the NAT gateway 10.

Routing rule 2: Forward a packet whose destination IP address belongs to 192.168.0.0/24 to the subnet 1.

The routing rule is applied to the router 1 of the VPC 1.

Step S106: Configure a routing rule on the VPC 2.

Routing rule 3: Forward a packet whose destination IP address is 10.0.0.9 to the NAT gateway 10.

Routing rule 4: Forward a packet whose destination IP address is 192.168.0.2 to the remote connection gateway 3.

The routing rule is applied to the router 2 of the VPC 2.

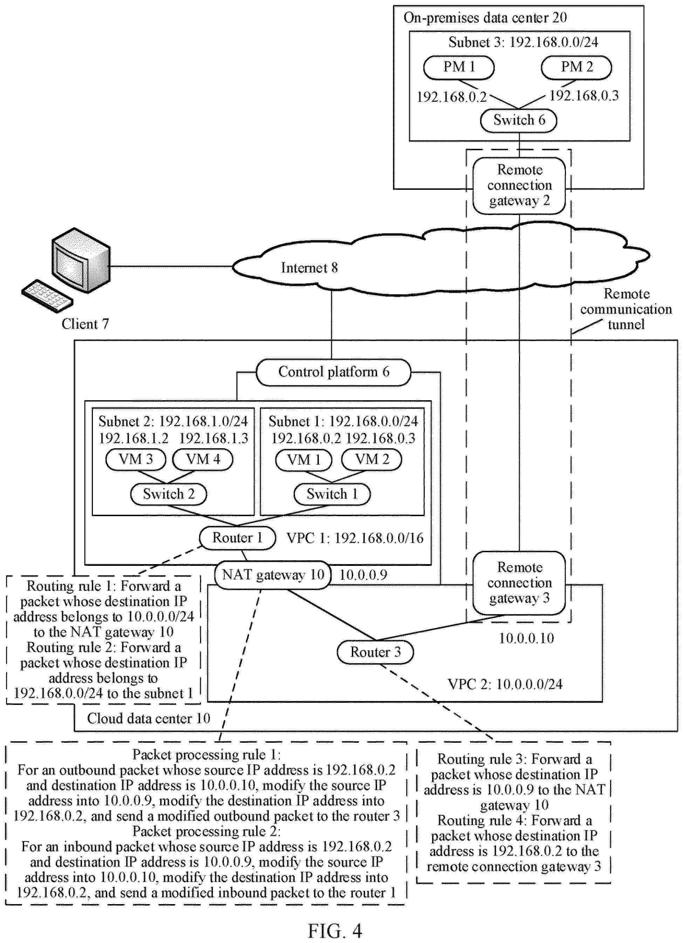

The foregoing configuration method is performed by the control platform 6. FIG. 4 is a schematic diagram of a structure of a VPC communications system after the VPC shown in FIG. 1 is configured by using the configuration method shown in FIG. 3. As shown in FIG. 4, through the foregoing configuration, the subnet 1 is bound with the NAT gateway 10, the subnet 2 is bound with the remote connection gateway 3, and bridging is implemented between the subnet 1 and the subnet 3 by using the VPC 2. The VM 1 can access the PM 1 by constructing an IP packet whose destination IP address is a private network address of the remote connection gateway 3, and the PM 1 can access the VM 1 by constructing an IP packet whose destination IP address is a private address of the NAT gateway 2.

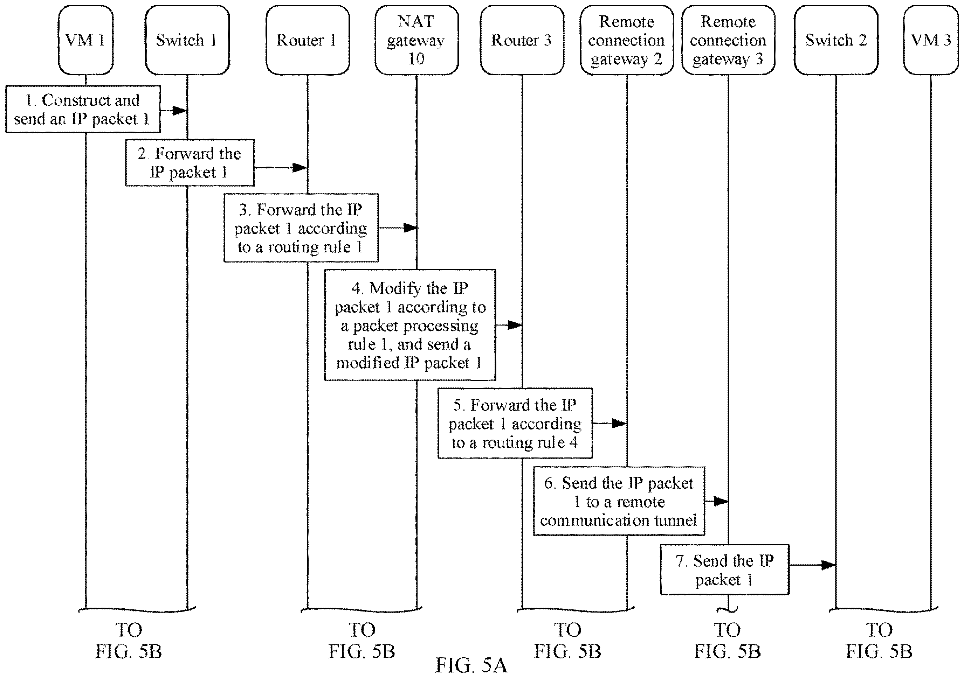

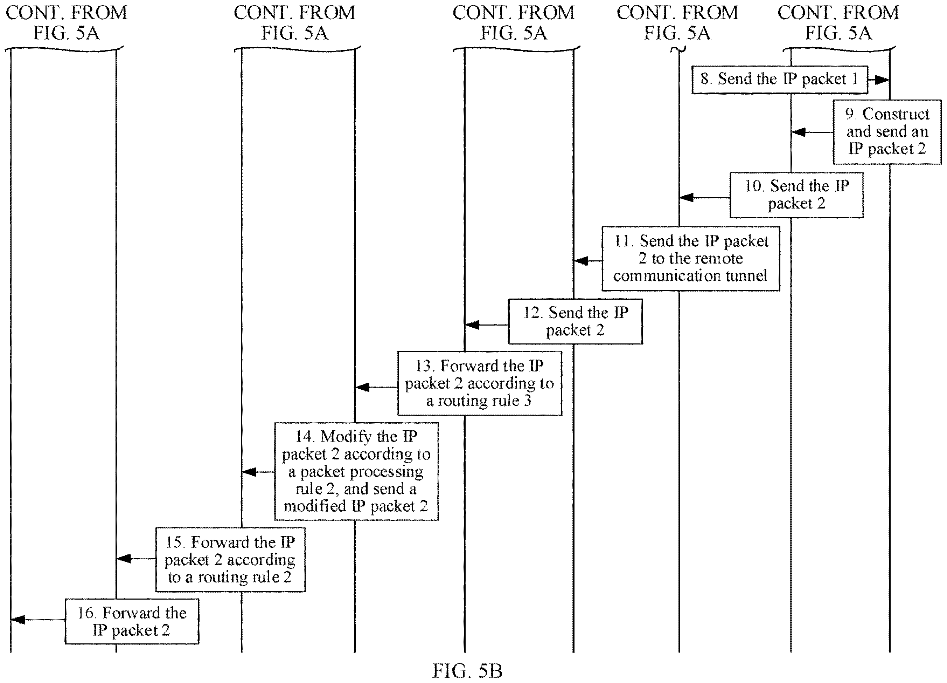

FIG. 5A and FIG. 5B are a data interaction diagram of a method for communication between a VPC and an on-premises data center based on the VPC communications system shown in FIG. 4 according to an embodiment of the present invention. The communication method is used to disclose a process of communication between a VM 1 and a PM 1. As shown in FIG. 5A and FIG. 5B, the method includes the following steps.

Step 1: The VM 1 constructs an IP packet 1 and sends the IP packet 1 to a switch 1.

A source IP address of an IP header of the IP packet 1 is a private network address 192.168.0.2 of the VM 1 in a subnet 1, a destination IP address of the IP header of the IP packet 1 is a private network address 10.0.0.10 of a remote connection gateway 2, and a data part of the IP packet 1 carries request information.

It should be noted that, based on a service requirement, the VM 1 may query and obtain a correspondence between 10.0.0.10 and the PM 1 in advance, for example, may query the correspondence between 10.0.0.10 and the PM 1 from a second VPC, or may query the correspondence between 10.0.0.10 and the PM 1 from a control platform 6.

Step 2: The switch 1 forwards the IP packet 1 to a router 1.

After receiving the IP packet 1, the switch 1 determines that the destination IP address of the IP packet 1 does not belong to the subnet 1, and sends the IP packet 1 to the router 1 to perform packet transmission across network segments.

Step 3: The router 1 forwards the IP packet 1 according to a routing rule 1.

After receiving the IP packet 1, the router 1 matches the routing rule 1 based on the destination IP address (10.0.0.10) of the IP packet 1, and sends the IP packet 1 to a NAT gateway 10 according to the routing rule 1.

Step 4: The NAT gateway 10 modifies the source IP address of the IP packet 1 according to a packet processing rule 1, and sends a modified IP packet 1 to a router 3.

After the NAT gateway 10 receives the IP packet 1 from the router 1, because the IP packet 1 is from the router 1, the NAT gateway 10 determines that the IP packet 1 is an outbound packet, matches the packet processing rule 1, modifies the source IP address of the IP packet 1 from 192.168.0.2 into 10.0.0.9, modifies the destination IP address of the IP packet 1 from 10.0.0.10 into 192.168.0.2, and sends a modified IP packet 1 to the router 3.

Step 5: The router 3 forwards the IP packet 1 to a remote connection gateway 3 according to a routing rule 4.

After receiving the IP packet 1, the router 3 matches the routing rule 4 based on the destination IP address (192.168.0.2) of the IP packet 1, and forwards the IP packet 1 to the remote connection gateway 3.

Step 6: The remote connection gateway 3 sends the IP packet 1 to the remote connection gateway 2 through a remote communication tunnel.

Step 7: The remote connection gateway 2 forwards the IP packet 1 to a switch 6.

Step 8: The switch 6 sends the IP packet 1 to the PM 1.

The switch 6 sends the IP packet 1 to the PM 1 based on the destination IP address 192.168.0.2 of the IP packet 1.

Step 9: The PM 1 constructs and sends an IP packet 2 to the switch 6.

The IP packet 2 is a reply packet of the IP packet 1.

After receiving the IP packet 1, the PM 1 obtains the request information from the data part of the IP packet 1, generates response information based on the request information, and constructs the IP packet 2. Specifically, the PM 1 sets the source IP address 10.0.0.9 of the IP packet 1 to a destination IP address of the IP packet 2, sets the destination IP address 192.168.0.2 of the IP packet 1 to a source IP address of the IP packet 2, adds the response information to a data part of the IP packet 2, and sends the IP packet 2 to the switch 6.

Step 10: The switch 6 forwards the IP packet 2 to the remote connection gateway 2.

After receiving the IP packet 2, the switch 6 determines that the destination IP address 10.0.0.9 of the IP packet 2 does not belong to a subnet 3 (192.168.0.0/24), and sends the IP packet 2 to the remote connection gateway 2 to perform remote packet transmission.

Step 11: The remote connection gateway 2 sends the IP packet 2 to the remote connection gateway 3 through the remote communication tunnel.

Step 12: The remote connection gateway 3 sends the IP packet 2 to the router 3.

Step 13: The router 3 forwards the IP packet 2 to the NAT gateway 10 according to a routing rule 3.

After receiving the IP packet 2, the router 3 matches the routing rule 3 based on the destination IP address (10.0.0.9) of the IP packet 2, and forwards the IP packet 2 to the NAT gateway 10.

Step 14: The NAT gateway 10 modifies the IP packet 2 according to a packet processing rule 2, and sends a modified IP packet 2 to the router 1.

After the NAT gateway 10 receives the IP packet 2 from the router 3, because the IP packet 2 is from the router 3, the NAT gateway 10 determines that the IP packet 2 is an inbound packet, matches the packet processing rule 2, modifies the destination IP address of the IP packet 2 from 10.0.0.9 into 192.168.0.2, modifies the source IP address of the IP packet 2 from 192.168.0.2 into 10.0.0.10, and sends a modified IP packet 2 to the router 1.

Step 15: The router 1 forwards the modified IP packet 2 to the switch 1 according to a routing rule 2.

The router 1 matches the routing rule 2 based on the destination IP address 192.168.0.2 of the IP packet 2, and sends the IP packet 2 to the subnet 1. Specifically, the router 1 sends the IP packet 2 to the switch 1 of the subnet 1.

Step 16: The switch 1 sends the IP packet 2 to the VM 1.

The switch 1 sends the IP packet 2 to the VM 1 based on the destination IP address 192.168.0.2 of the IP packet 2.

After receiving the IP packet 2, the VM 1 determines that the IP packet 2 is the reply packet of the IP packet 1 based on the source IP address 10.0.0.10 and the destination IP address 192.168.0.2 of the IP packet 2 (because the source IP address and the destination IP address of the IP packet 2 are inverted compared with those of the IP packet 1). The VM 1 obtains the reply information from the data part of the IP packet 2 to complete a communication process between the VM 1 and the VM 2.

In conclusion, the NAT gateway 10 and the VPC 2 are configured in the cloud data center 10, and regulation configuration is performed, so that the cloud VM 1 and the on-premises PM 1 can communicate with each other when private network addresses of the VM 1 and the PM 1 are the same.

For example, this embodiment of the present invention is applicable to the following scenario. To be specific, the VPC 2 is used as a large internal network of an enterprise, and the VPC 1 is used as a small internal network of the enterprise. For example, the VPC 1 is a virtual network of a financial department, the subnet 3 is an on-premises network of a research and development department, and the VPC 2 is a virtual network of an IT management department of the enterprise. When private network addresses of the VPC 1 and the subnet 3 overlap, a private network address of the VPC 2 may be applied for from the control platform. For example, the VPC 1 applies for a private network address 1 of the VPC 2, and the subnet 3 applies for a private network address 2 of the VPC 2. The control platform sets a packet processing rule on the NAT gateway 10, to bind a virtual machine in the VPC 1 with the private network address 1, and bind a physical machine in the subnet 3 with the private network address 2. The virtual machine in the VPC 1 may access the physical machine in the subnet 3 by accessing the private network address 2, and the physical machine in the subnet 3 may access the virtual machine in the VPC 1 by accessing the private network address 1. In this way, a technical problem that communication cannot be performed because a cloud private network address and an on-premises private network address inside the enterprise overlap is resolved.

It should be noted that, in this embodiment of the present invention, a virtual machine may also be disposed in the on-premises data center, that is, a PM may be replaced with a VM. This is not limited in this embodiment of the present invention.

In addition, in another embodiment of the present invention, packet processing rules 3 and 4 may be further set on the NAT gateway 10 to replace the packet processing rules 1 and 2.

### Packet processing rule 3:

For an outbound packet whose source IP address is 192.168.0.2 and destination IP address is 10.0.0.10, modify the source IP address into 9.9.9.9, modify the destination IP address into 192.168.0.2, and send a modified outbound packet to a router 3.

### Packet processing rule 4:

For an inbound packet whose source IP address is 192.168.0.2 and destination IP address is 9.9.9.9, modify the source IP address into 10.0.0.10, modify the destination IP address into 192.168.0.2, and send a modified inbound packet to the router 1.

In this embodiment, it is assumed that the PM 1 trusts only an IP packet whose source IP address is 9.9.9.9, and when receiving an IP packet whose source IP address is not 9.9.9.9, discards the IP packet. In this case, the packet processing rules 3 and 4 are configured on the NAT gateway 10, so that a source IP address of an IP packet received by the PM 1 is 9.9.9.9. This ensures that the PM 1 does not discard the IP packet but responds to the IP packet.

This embodiment is applicable to a case in which an important database is set on the PM 1. For example, the PM 1 is a database of a bank, and the VPC needs to perform source address translation by using the NAT gateway 10, to modify a source address of an IP packet sent by the virtual machine in the VPC 1 into a trusted address of the PM 1, so as to ensure that the PM 1 normally processes the IP packet.

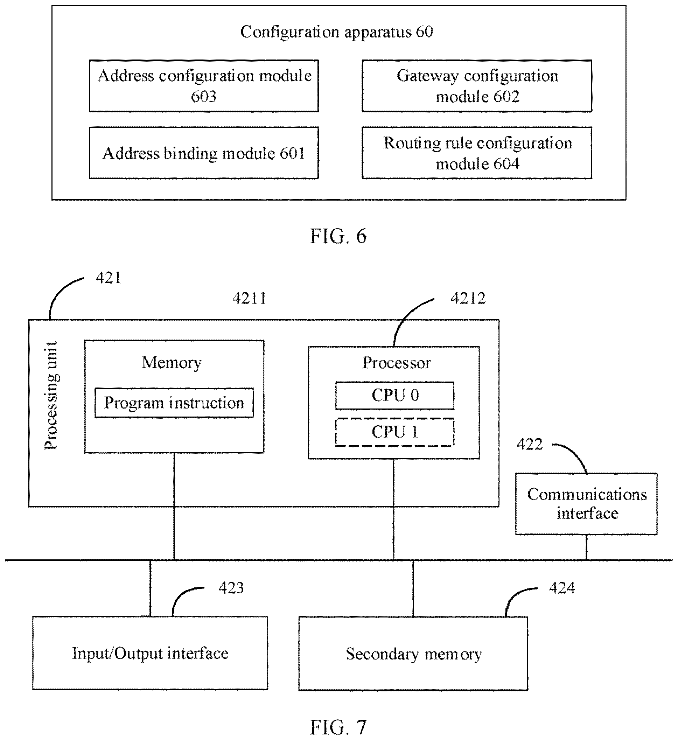

Further, FIG. 6 is a schematic diagram of a structure of a configuration apparatus according to an embodiment of the present invention. As shown in FIG. 6, the configuration apparatus 60 includes an address binding module 601, a gateway configuration module 602, an address configuration module 603, and a routing rule configuration module 604. The gateway configuration module 602 is configured to execute the action of creating a NAT gateway and a remote connection gateway in the configuration method disclosed in the foregoing embodiments. The address configuration module 603 is configured to execute the action of configuring private network addresses for the NAT gateway and the remote connection gateway in the configuration method disclosed in the foregoing embodiments. The address binding module 601 is configured to execute the action of configuring a packet processing rule for the NAT gateway in the configuration method disclosed in the foregoing embodiments. The routing rule configuration module 604 is configured to execute the action of configuring a routing rule for a router in the configuration method disclosed in the foregoing embodiments.

The configuration apparatus 60 may be disposed in the control platform 6 disclosed in the foregoing embodiments.

FIG. 7 is a schematic diagram of a structure of a computing device according to an embodiment of the present invention. As shown in FIG. 7, the computing device may include a processing unit 421 and a communications interface 422. The processing unit 421 is configured to implement functions defined by an operating system running on a physical server and various software programs, for example, to implement a function of the control platform 6 shown in FIG. 2. The communications interface 422 is configured to communicate and interact with another computing node. Another device may be another physical server. Specifically, the communications interface 422 may be a network adapter. Optionally, the physical server may further include an input/output interface 423. The input/output interface 423 is connected to an input/output device, to receive input information and output an operation result. The input/output interface 423 may be a mouse, a keyboard, a display, an optical disk driver, or the like. Optionally, the physical server may further include a secondary memory 424. The secondary memory 424 is generally referred to as an external memory. A storage medium of the secondary memory 424 may be a magnetic medium (for example, a floppy disk, a hard disk, or a magnetic tape), an optical medium (for example, an optical disc), a semiconductor medium (for example, a solid-state drive), or the like. The processing unit 421 may have a plurality of specific implementation forms. For example, the processing unit 421 may include a processor 4212 and a memory 4211. The processor 4212 performs related operations of the control platform 6 in the foregoing embodiments based on program instructions stored in the memory 4211. The processor 4212 may be a central processing unit (CPU) or a graphics processing unit (English: graphics processing unit, GPU). The processor 4212 may be a single-core processor or a multi-core processor. The processing unit 421 may alternatively be independently implemented by using a logic device with built-in processing logic, for example, a field programmable gate array (English full name: Field Programmable Gate Array, FPGA for short) or a digital signal processor (English: digital signal processor, DSP).

A person skilled in the art may clearly understand that, for the purpose of convenient and brief description, for a detailed working process of the foregoing system, apparatus, and unit, refer to a corresponding process in the foregoing method embodiments. Details are not described herein again. The descriptions of procedures corresponding to the foregoing accompanying drawings have respective focuses. For a part that is not described in detail in a procedure, refer to related descriptions of another procedure.

Further, in another embodiment of the present invention, a container may alternatively be used to replace a virtual machine. This is not limited in this embodiment of the present invention.

It should be noted that any apparatus embodiment described above is merely an example. The units described as separate parts may or may not be physically separate, and parts displayed as units may or may not be physical units, that is, may be located in one position, or may be distributed on a plurality of network units. Some or all of the processes may be selected based on actual requirements to achieve the objectives of the solutions of embodiments. In addition, in the accompanying drawings of the apparatus embodiments provided in the present invention, connection relationships between processes indicate that the processes have communication connections with each other, which may be specifically implemented as one or more communications buses or signal cables. A person of ordinary skill in the art may understand and implement embodiments of the present invention without creative efforts.

Based on the descriptions of the foregoing implementations, a person skilled in the art may clearly understand that the present invention may be implemented by software in addition to necessary universal hardware, or by dedicated hardware, including a dedicated integrated circuit, a dedicated CPU, a dedicated memory, a dedicated component, and the like. Generally, any function that can be implemented by a computer program can be easily implemented by corresponding hardware. Moreover, a specific hardware structure used to implement a same function may be in various forms, for example, in a form of an analog circuit, a digital circuit, or a dedicated circuit. However, for the present invention, software program implementation is a better implementation in most cases. Based on such an understanding, technical solutions of the present invention essentially or the part contributing to the conventional technology may be implemented in a form of a software product. The computer software product is stored in a readable storage medium, such as a floppy disk of a computer, a USB flash drive, a removable hard disk, a read-only memory (Read-Only Memory, ROM), a random access memory (Random Access Memory, RAM), a magnetic disk, or an optical disc, and includes several instructions for instructing a computer device (which may be a personal computer, a host, a network device, or the like) to perform the methods described in embodiments of the present invention.

A person skilled in the art may clearly understand that, for a detailed working process of the foregoing system, apparatus, or unit, refer to a corresponding process in the foregoing method embodiments. Details are not described herein again.

## Claims

1. A method for configuring communication between a virtual private cloud VPC and an on-premises data center (20), wherein a first virtual private cloud VPC and a subnet (3) of the on-premises data center that have a same private network address segment communicate with each other by using a second VPC, wherein the second VPC is used as a large internal network of an enterprise, and wherein the first VPC is used as a small internal network of the enterprise, and a private network address segment of the second VPC is different from private network address segments of the first VPC and the subnet; and the method comprises:
configuring (S102) a network address translation NAT gateway (10) on the first VPC to form a connection between the NAT gateway and the second VPC, and configuring (S103) a remote connection gateway on the second VPC to form a remote connection between the remote connection gateway and the subnet of the on-premises data center, wherein a first address is configured for the NAT gateway, a second address is configured for the remote connection gateway, the first address and the second address belong to the private network address segment of the second VPC, and the first address is different from the second address; and
configuring (S105, S106) a first packet processing rule and a second packet processing rule on the NAT gateway, wherein the first packet processing rule comprises: translating a source address of an outbound packet from a private network address in the first VPC into the first address, translating a destination address of the outbound packet from the second address into a private network address in the subnet, and sending a modified outbound packet to a router of the second VPC; and the second packet processing rule comprises: modifying a source address of an inbound packet from the private network address in the subnet into the second address, translating a destination address of the inbound packet from the first address into the private network address in the first VPC, and sending a modified inbound packet to a router of the first VPC.

2. An apparatus (60) for configuring communication between a virtual private cloud VPC and an on-premises data center, wherein a first virtual private cloud ,VPC, and a subnet of the on-premises data center that have a same private network address segment communicate with each other by using a second VPC, wherein the second VPC is used as a large internal network of an enterprise, and wherein the first VPC is used as a small internal network of the enterprise, and a private network address segment of the second VPC is different from private network address segments of the first VPC and the subnet; and the apparatus comprises:
a gateway configuration module (602), configured to: configure (S102) a NAT gateway on the first VPC (10) to form a connection between the NAT gateway and the second VPC, and configure a remote connection gateway on the second VPC to form a remote connection between the remote connection gateway and the subnet of the on-premises data center;
an address configuration module (603), configured to: configure a first address for the NAT gateway, and configure a second address for the remote connection gateway, wherein the first address and the second address belong to the private network address segment of the second VPC, and the first address is different from the second address; and
an address binding module (601), configured to configure (S105, S106) a first packet processing rule and a second packet processing rule on the NAT gateway, wherein the first packet processing rule comprises: translating a source address of an outbound packet from a private network address in the first VPC into the first address, translating a destination address of the outbound packet from the second address into a private network address in the subnet, and sending a modified outbound packet to a router of the second VPC; and the second packet processing rule comprises: modifying a source address of an inbound packet from the private network address in the subnet into the second address, translating a destination address of the inbound packet from the first address into the private network address in the first VPC, and sending a modified inbound packet to a router of the first VPC.

## Patentansprüche

1. Verfahren zum Konfigurieren der Kommunikation zwischen einer virtuellen privaten Cloud (virtual private cloud - VPC) und einem lokalen Datencenter (20), wobei eine erste virtuelle private Cloud VPC und ein Unternetz (3) des lokalen Datencenters, die ein gleiches privates Netzwerkadressensegment aufweisen, miteinander unter Verwendung einer zweiten VPC kommunizieren, wobei die zweite VPC als ein großes internes Netzwerk eines Unternehmens verwendet wird, und wobei die erste VPC als ein kleines internes Netzwerk des Unternehmens verwendet wird, und ein privates Netzwerkadressensegment der zweiten VPC sich von privaten Netzwerkadressensegmenten der ersten VPC und des Unternetzes unterscheidet; und das Verfahren umfasst:
Konfigurieren (S102) eines Netzwerkadressenübersetzungs-NAT-Gateways (10) (network address translation - NAT) auf der ersten VPC, um eine Verbindung zwischen dem NAT-Gateway und der zweiten VPC zu bilden, und Konfigurieren (S103) eines Fernverbindungs-Gateways auf der zweiten VPC, um eine Fernverbindung zwischen dem Fernverbindungs-Gateway und dem Unternetz des lokalen Datencenters zu bilden, wobei eine erste Adresse für das NAT-Gateway konfiguriert ist, eine zweite Adresse für das Fernverbindungs-Gateway konfiguriert ist, die erste Adresse und die zweite Adresse zu dem privaten Netzwerkadressensegment der zweiten VPC gehören, und die erste Adresse sich von der zweiten Adresse unterscheidet; und
Konfigurieren (S105, S106) einer ersten Paketverarbeitungsregel und einer zweiten Paketverarbeitungsregel auf dem NAT-Gateway, wobei die erste Paketverarbeitungsregel umfasst: Übersetzen einer Quelladresse eines ausgehenden Pakets von einer privaten Netzwerkadresse in der ersten VPC in die erste Adresse, Übersetzen einer Zieladresse des ausgehenden Pakets von der zweiten Adresse in eine private Netzwerkadresse in dem Unternetz, und Senden eines modifizierten ausgehenden Pakets an einen Router der zweiten VPC; und die zweite Paketverarbeitungsregel umfasst: Modifizieren einer Quelladresse eines eingehenden Pakets von der privaten Netzwerkadresse in dem Unternetz in die zweite Adresse, Übersetzen einer Zieladresse des eingehenden Pakets von der ersten Adresse in die private Netzwerkadresse in der ersten VPC, und Senden eines modifizierten eingehenden Pakets an einen Router der ersten VPC.

2. Vorrichtung (60) zum Konfigurieren der Kommunikation zwischen einer virtuellen privaten Cloud VPC und einem lokalen Datencenter, wobei eine erste virtuelle private Cloud, VPC, und ein Unternetz des lokalen Datencenters, die ein gleiches privates Netzwerkadressensegment aufweisen, miteinander unter Verwendung einer zweiten VPC kommunizieren, wobei die zweite VPC als ein großes internes Netzwerk eines Unternehmens verwendet wird, und wobei die erste VPC als ein kleines internes Netzwerk des Unternehmens verwendet wird, und ein privates Netzwerkadressensegment der zweiten VPC sich von privaten Netzwerkadressensegmenten der ersten VPC und des Unternetzes unterscheidet; und die Vorrichtung umfasst:
ein Gateway-Konfigurationsmodul (602), das dazu konfiguriert ist: ein NAT-Gateway auf der ersten VPC (10) zu konfigurieren (S102), um eine Verbindung zwischen dem NAT-Gateway und der zweiten VPC zu bilden, und ein Fernverbindungs-Gateway auf der zweiten VPC zu konfigurieren, um eine Fernverbindung zwischen dem Fernverbindungs-Gateway und dem Unternetz des lokalen Datencenters zu bilden;
ein Adresskonfigurationsmodul (603), das dazu konfiguriert ist: eine erste Adresse für das NAT-Gateway zu konfigurieren, und eine zweite Adresse für das Fernverbindungs-Gateway zu konfigurieren, wobei die erste Adresse und die zweite Adresse zu dem privaten Netzwerkadressensegment der zweiten VPC gehören, und die erste Adresse sich von der zweiten Adresse unterscheidet; und
ein Adressbindungsmodul (601), das dazu konfiguriert ist, eine erste Paketverarbeitungsregel und eine zweite Paketverarbeitungsregel auf dem NAT-Gateway zu konfigurieren (S105, S106), wobei die erste Paketverarbeitungsregel umfasst: Übersetzen einer Quelladresse eines ausgehenden Pakets von einer privaten Netzwerkadresse in der ersten VPC in die erste Adresse, Übersetzen einer Zieladresse des ausgehenden Pakets von der zweiten Adresse in eine private Netzwerkadresse in dem Unternetz, und Senden eines modifizierten ausgehenden Pakets an einen Router der zweiten VPC; und die zweite Paketverarbeitungsregel umfasst: Modifizieren einer Quelladresse eines eingehenden Pakets von der privaten Netzwerkadresse in dem Unternetz in die zweite Adresse, Übersetzen einer Zieladresse des eingehenden Pakets von der ersten Adresse in die private Netzwerkadresse in der ersten VPC, und Senden eines modifizierten eingehenden Pakets an einen Router der ersten VPC.

## Revendications

1. Procédé de configuration de communication entre un nuage privé virtuel VPC et un centre de données sur site (20), dans lequel un premier nuage privé virtuel VPC et un sous-réseau (3) du centre de données sur site qui ont un même segment d'adresse de réseau privé communiquent entre eux à l'aide d'un second VPC, dans lequel le second VPC est utilisé comme un grand réseau interne d'une entreprise, et dans lequel le premier VPC est utilisé comme un petit réseau interne de l'entreprise, et un segment d'adresse de réseau privé du second VPC est différent de segments d'adresse de réseau privé du premier VPC et du sous-réseau ; et le procédé comprend :
la configuration (S102) d'une passerelle de traduction d'adresse réseau NAT (10) sur le premier VPC pour former une connexion entre la passerelle NAT et le second VPC, et la configuration (S103) d'une passerelle de connexion à distance sur le second VPC pour former une connexion à distance entre la passerelle de connexion à distance et le sous-réseau du centre de données sur site, dans lequel une première adresse est configurée pour la passerelle NAT, une seconde adresse est configurée pour la passerelle de connexion à distance, la première adresse et la seconde adresse appartiennent au segment d'adresse de réseau privé du second VPC, et la première adresse est différente de la seconde adresse ; et
la configuration (S105, S106) d'une première règle de traitement de paquet et d'une seconde règle de traitement de paquet sur la passerelle NAT, dans lequel la première règle de traitement de paquet comprend : la traduction d'une adresse source d'un paquet sortant à partir d'une adresse de réseau privé dans le premier VPC en la première adresse, la traduction d'une adresse de destination du paquet sortant de la seconde adresse en une adresse de réseau privé dans le sous-réseau, et l'envoi d'un paquet sortant modifié à un routeur du second VPC ; et la seconde règle de traitement de paquet comprend : la modification d'une adresse source d'un paquet entrant à partir de l'adresse de réseau privé dans le sous-réseau en la seconde adresse, la traduction d'une adresse de destination du paquet entrant à partir de la première adresse en l'adresse de réseau privé dans le premier VPC, et l'envoi d'un paquet entrant modifié à un routeur du premier VPC.

2. Appareil (60) de configuration de communication entre un nuage privé virtuel VPC et un centre de données sur site, dans lequel un premier nuage privé virtuel, VPC, et un sous-réseau du centre de données sur site qui ont un même segment d'adresse de réseau privé communiquent entre eux à l'aide d'un second VPC, dans lequel le second VPC est utilisé comme un grand réseau interne d'une entreprise, et dans lequel le premier VPC est utilisé comme un petit réseau interne de l'entreprise, et un segment d'adresse de réseau privé du second VPC est différent de segments d'adresse de réseau privé du premier VPC et du sous-réseau ; et l'appareil comprend :
un module de configuration de passerelle (602), configuré pour : configurer (S102) une passerelle NAT sur le premier VPC (10) pour former une connexion entre la passerelle NAT et le second VPC, et configurer une passerelle de connexion à distance sur le second VPC pour former une connexion à distance entre la passerelle de connexion à distance et le sous-réseau du centre de données sur site ;
un module de configuration d'adresse (603), configuré pour : configurer une première adresse pour la passerelle NAT, et configurer une seconde adresse pour la passerelle de connexion à distance, dans lequel la première adresse et la seconde adresse appartiennent au segment d'adresse de réseau privé du second VPC, et la première adresse est différente de la seconde adresse ; et
un module de liaison d'adresse (601), configuré pour configurer (S105, S106) une première règle de traitement de paquet et une seconde règle de traitement de paquet sur la passerelle NAT, dans lequel la première règle de traitement de paquet comprend : la traduction d'une adresse source d'un paquet sortant à partir d'une adresse de réseau privé dans le premier VPC en la première adresse, la traduction d'une adresse de destination du paquet sortant de la seconde adresse en une adresse de réseau privé dans le sous-réseau, et l'envoi d'un paquet sortant modifié à un routeur du second VPC ; et la seconde règle de traitement de paquet comprend : la modification d'une adresse source d'un paquet entrant à partir de l'adresse de réseau privé dans le sous-réseau en la seconde adresse, la traduction d'une adresse de destination du paquet entrant à partir de la première adresse en l'adresse de réseau privé dans le premier VPC, et l'envoi d'un paquet entrant modifié à un routeur du premier VPC.
